# EUROPÄISCHE PATENTSCHRIFT

(11) **EP 1 996 898 B1**
(45) Veröffentlichungstag und Bekanntmachung des Hinweises auf die Patenterteilung: **22.09.2010**
(21) Anmeldenummer: 07723393.0
(22) Anmeldetag: 20.03.2007
(51) Int. Cl.: G01B 21/04

(54) **PRÜFKÖRPER UND VERFAHREN ZUM EINMESSEN EINES KOORDINATENMESSGERÄTES**
CALIBRATING GAUGE AND METHOD FOR CALIBRATING A COORDINATE MEASURING MACHINE
EPROUVETTE ET PROCEDE DE CALIBRAGE D'UN APPAREIL DE MESURE DE COORDONNEES

(30) Priorität: 22.03.2006 DE 102006014509
(43) Veröffentlichungstag der Anmeldung: 03.12.2008
(73) Patentinhaber: Carl Zeiss Industrielle Messtechnik GmbH, 73447 Oberkochen (DE)
(72) Erfinder: DE CAMPOS PORATH, Mauricio, 88040-600 Floranópolis/ SC (BR); SEITZ, Karl, 73447 Oberkochen (DE); ROTH, Roland, 73550 Waldstetten (DE); DOMINICUS, Walter, 89551 Königsbronn (DE); DOLLANSKY, Alexander, 89561 Dischingen (DE); STRAUSS, Wolfgang, 89195 Staig (DE)
(74) Vertreter: Duhme, Torsten
(86) Internationale Anmeldenummer: PCT/EP2007/002426
(87) Internationale Veröffentlichungsnummer: WO 2007/107324

(56) Entgegenhaltungen:
- EP-A1- 0 330 901
- US-A- 5 983 512
- US-A1- 2005 235 506
- US-B1- 6 493 956

## Beschreibung

Die vorliegende Erfindung betrifft einen Prüfkörper zum Einmessen eines Koordinatenmessgerätes, insbesondere eines Multisensor-Koordinatenmessgerätes, mit zumindest einem Kugelsegment, das einen sphärischen Oberflächenbereich und einen ebenen Oberflächenbereich aufweist, der an den sphärischen Oberflächenbereich angrenzt, wobei der sphärische Oberflächenbereich ein Teilbereich aus einer Vollkugeloberfläche ist, der in einer kreisbogenförmigen Kante endet, und mit einer Platte, die eine ebene Fläche aufweist, über der der sphärische Oberflächenbereich in einem definierten Abstand so angeordnet ist, dass die Kante in einer Draufsicht sichtbar ist, wobei die ebene Fläche zumindest eine Durchgangsbohrung aufweist, die senkrecht unter der Kante angeordnet ist, so dass die Kante seitlich antastbar ist.

Ein Prüfkörper der zuvor genannten Art ist beispielsweise aus US 5,983,512 bekannt.

Die Erfindung betrifft ferner ein Verfahren zum Einmessen eines Koordinatenmessgerätes mit zumindest einem ersten und einem zweiten Messsensor, die auf verschiedenen physikalischen Messprinzipien beruhen, wobei ein solcher Prüfkörper zum Einsatz kommt.

Ein Koordinatenmessgerät im Sinne der vorliegenden Erfindung ist eine Anlage oder eine Maschine mit zumindest einem Sensor, der relativ zu einem Messobjekt beweglich angeordnet ist. Der Sensor ist in der Lage, einen oder mehrere Messpunkte an einem Messobjekt zu erfassen. Aus der Position des Sensors im Messvolumen sowie anhand der definierten Beziehung zwischen dem Sensor und dem erfassten Messpunkt lassen sich dann Raumkoordinaten für den Messpunkt bestimmen. Durch die Bestimmung von Raumkoordinaten an mehreren Messpunkten eines Messobjektes können geometrische Abmessungen und auch die Form eines Messobjektes vermessen werden. Ein typisches Einsatzgebiet für solche Koordinatenmessgeräte ist die Qualitätskontrolle von Formteilen beliebiger Art.

Ein häufig eingesetzter Sensor für Koordinatenmessgeräte ist ein sogenannter Tastkopf mit einem beweglich gelagerten Taststift. Das freie Ende des Taststiftes dient dazu, einen Messpunkt an dem Messobjekt physisch anzutasten, um den Tastkopf in eine definierte Lage zu dem Messpunkt zu bringen. Aus der Stellung des Tastkopfes und der Position des Taststiftes beim Antasten lassen sich die Raumkoordinaten des angetasteten Messpunktes bestimmen.

Anstelle von taktilen Sensoren, wie solchen Tastköpfen, können jedoch auch berührungslos messende Sensoren verwendet werden, also Sensoren, die auf einem anderen physikalischen Messprinzip beruhen. Hierzu gehören beispielsweise Lasersensoren und/oder Bildverarbeitungssensoren, die eine Kamera verwenden. Darüber hinaus gibt es Koordinatenmessgeräte, die mehrere Sensoren besitzen, um für eine bestimmte Messaufgabe einen geeigneten Sensor auszuwählen oder um ein Messobjekt in einer Aufspannung mit verschiedenen Messsensoren zu vermessen.

Wie leicht einzusehen ist, hängt die Messgenauigkeit eines Koordinatenmessgerätes unter anderem davon ab, wie genau das Koordinatenmessgerät kalibriert werden kann. Bei einem Multisensor-Koordinatenmessgerät kann zudem die Genauigkeit eine Rolle spielen, mit der der Abstandsvektor zwischen den verschiedenen Sensoren bestimmt werden kann, insbesondere wenn mit mehreren Sensoren gemessen wird. Der Abstandsvektor gibt die Richtung und Entfernung zwischen den Referenzmittelpunkten der Sensoren an.

Eine Möglichkeit, um einen Abstandsvektor zu bestimmen, besteht darin, einen definierten Prüfkörper mit bekannten geometrischen Abmessungen mit jedem Sensorsystem des Koordinatenmessgerätes zu vermessen. Durch Abgleich der erhaltenen Referenzmesswerte lässt sich der Abstandsvektor bestimmen. Bei einem Koordinatenmessgerät mit mehreren Sensoren, die auf unterschiedlichen Messprinzipien beruhen, ist eine Voraussetzung für eine exakte Einmessung, dass der Prüfkörper (genauer gesagt das sogenannte Prüfmerkmal an einem Prüfkörper, im Folgenden als Referenzmessobjekt bezeichnet) von allen Sensoren mit vergleichbar hoher Genauigkeit erfasst werden kann. Typischerweise werden als Referenzmessobjekte (Prüfmerkmale) Kugeln und/oder Bohrungen eingesetzt, wobei ein Prüfkörper mehrere dieser Referenzmessobjekte besitzen kann.

Die eingangs genannte US 5,983,512 beschreibt einen Prüfkörper, der aus zwei Platten mit einer Vielzahl von Durchgangsbohrungen besteht. Zwischen den beiden Platten sind eine Vielzahl von Referenzobjekten angeordnet. Mittels der Referenzobjekte können geometrische Fehler des Koordinatenmessgeräts ermittelt werden. Als Referenzobjekte sind Ringe, Vollkugeln und Kugelstümpfe vorgesehen.

US 6,493,956 B1 offenbart einen Prüfkörper, der insgesamt vier Halbkugeln aufweist. Diese sind auf der Oberfläche einer geschlossenen Platte angeordnet. Zudem weist dieser Prüfkörper quaderförmige Objekte zur Kalibrierung eines Koordinatenmessgeräts auf.

DE 298 22 001 U1 offenbart einen Prüfkörper, bei dem drei Kugeln in unterschiedlicher Höhe auf zylinderförmigen oder konischen Abstandshaltern angeordnet sind. Außerdem beinhaltet der bekannte Prüfkörper quaderförmige Endmaße und einen Ring, dessen Ringinnenseite (= Bohrung) abgetastet werden kann.

Ein anderer Prüfkörper mit einer Vielzahl von Kugeln als Referenzmessobjekten ist aus DE 200 00 469 U1 bekannt. Hier sind die Kugeln in einer Mittelebene einer thermisch stabilen Platte aus Glaskeramik angeordnet, wobei jede Kugel an einem Kugelhalter befestigt ist.

Des Weiteren sind Prüfkörper zum Einmessen von Koordinatenmessgeräten aus DE 36 37 410 A1 DE 39 30 223 A1 DE 100 48 096 A1, DE 37 19 838 A1, DE 197 03 738 A1, DE 196 11 617 A1 DE 37 35 075 A1, DE 195 07 806 A1 und DE 196 40 674 A1 bekannt. In all diesen Fällen kommen Kugeln oder Bohrungen als Referenzmessobjekte zum Einsatz. Aus DE 101 22 080 A1 ist die Verwendung von einem Quader, einem Konus, einem Zylinder oder einem Kugeltripel als Referenzmessobjekt bekannt.

Für ein hochgenaues Koordinatenmessgerät, das taktile und berührungslos messende Sensoren verwendet, sind diese Prüfkörper jedoch nicht optimal. Wegen des relativ großen Krümmungsradius von Kugeln ist die Schärfe der Kantenabbildung einer Kugel auf einem Bildsensor begrenzt. Dadurch wird die Genauigkeit, mit der der Kugelmittelpunkt als Referenzmesswert bestimmt werden kann, beeinträchtigt.

Bei Bohrungen als Referenzmessobjekten hängt die erreichbare Genauigkeit von der Kantenqualität und Formtreue der Bohrung ab. Die optische Qualität der Kanten wird meistens durch das Bearbeitungsverfahren beeinträchtigt. Bei spröden Werkstoffen sind Ausbrüche an den Kanten unvermeidbar, deren Größe im Bereich mehrere µm liegen können. Bei weicheren Materialien wird die reale Kante der Bohrung meistens von Mikrograten bedeckt. Darüber hinaus ist bei Bohrungen eine sehr genaue Rechtwinkligkeit der Bohrachse zur Stirnfläche des Prüfkörpers erforderlich, damit die berührungslos und taktil ermittelten Bohrmittelpunkte verglichen werden können.

Vor diesem Hintergrund ist es eine Aufgabe der vorliegenden Erfindung, einen Prüfkörper und ein Verfahren anzugeben, die ein hochgenaues Einmessen eines Multisensor-Koordinatenmessgerätes ermöglichen.

Nach einem ersten Aspekt der vorliegenden Erfindung wird diese Aufgabe durch einen Prüfkörper der eingangs genannten Art gelöst, wobei das Kugelsegment einen Segmentwinkel von maximal 180° aufweist, so dass die Kante sowohl bei einer Draufsicht von der sphärischen Oberflächenseite her als auch in einer Draufsicht von der ebenen Oberflächenseite her formtreu sichtbar ist.

Nach einem weiteren Aspekt der Erfindung wird die Aufgabe durch ein Verfahren zum Einmessen eines Koordinatenmessgerätes mit zumindest einem ersten und einem zweiten Messsensor gelöst, die auf verschiedenen physikalischen Messprinzipien beruhen, mit den Schritten:
- Anordnen eines Prüfkörpers mit zumindest einem Referenzmessobjekt in einem Messvolumen des Koordinatenmessgerätes,
- Vermessen des zumindest einen Referenzmessobjektes mit dem ersten Messsensor, um erste Referenzmesswerte zu bestimmen,
- Vermessen des zumindest einen Referenzmessobjektes mit dem zweiten Messsensor, um zweite Referenzmesswerte zu Bestimmen, und
- Abgleichen der ersten und zweiten Referenzmesswerte,
wobei das Referenzmessobjekt ein Kugelsegment ist, das einen sphärischen Oberflächenbereich und einen ebenen Oberflächenbereich aufweist, der an den sphärischen Oberflächenbereich angrenzt, wobei der sphärische Oberflächenbereich ein Teilbereich aus einer Vollkugeloberfläche ist, der in einer kreisbogenförmigen Kante endet, wobei der Prüfkörper eine Platte mit einer ebenen Fläche aufweist, über der der sphärische Oberflächenbereich in einem definierten Abstand so angeordnet ist, dass die Kante in einer Draufsicht sichtbar ist, wobei die ebene Fläche zumindest eine Durchgangsbohrung aufweist, die senkrecht unter der Kante angeordnet ist, so dass die Kante seitlich antastbar ist, wobei das Kugelsegment einen Segmentwinkel von maximal 180° aufweist, so dass die Kante sowohl bei einer Draufsicht von der sphärischen Oberflächenseite her als auch in einer Draufsicht von der ebenen Oberflächenseite her formtreu sichtbar ist, und wobei das Referenzmessobjekt sowohl von der Unterseite als auch von der Oberseite der Platte her vermessen wird.

Der Prüfkörper der vorliegenden Erfindung beinhaltet also ein Referenzmessobjekt, das sowohl einen sphärischen Oberflächenbereich als auch eine "scharfe" Kante besitzt. Die Kante ist so angeordnet, dass sie in einer Draufsicht erkannt und ausgewertet werden kann. Formtreu meint in diesem Zusammenhang, dass die Draufsicht eine Bestimmung des Kantenverlaufs und insbesondere die Bestimmung eines Kreisbogenmittelpunktes ermöglicht. Dazu ist es von Vorteil, jedoch nicht zwingend erforderlich, wenn die Kante vollständig sichtbar ist.

Ein Kugelsegment lässt sich beispielsweise durch Abschleifen aus einer Vollkugel relativ einfach und mit hoher Genauigkeit herstellen.

Das Referenzmessobjekt des neuen Prüfkörpers besitzt einerseits eine "scharfe" Kante, die mit einem berührungslos messenden Sensor sehr exakt erfasst werden kann. Auf Grund des kreisbogenförmigen Kantenverlaufs kann ein Kreismittelpunkt bestimmt werden. Andererseits besitzt das Referenzmessobjekt des neuen Prüfkörpers einen sphärischen Oberflächenbereich, der sehr gut mit einem taktilen Sensor vermessen werden kann, um einen (gedachten) Kugelmittelpunkt zu bestimmen. Da der sphärische Oberflächenbereich und die Kante in einer definierten Beziehung zueinander stehen, lassen sich auch die beiden erwähnten Mittelpunkte zueinander in Beziehung setzen. Damit können die Referenzmesswerte, die mit unterschiedlichen Sensoren gewonnen werden, mit hoher Genauigkeit abgeglichen bzw. miteinander verglichen werden.

Da der neue Prüfkörper auf Grund der zuvor genannten Eigenschaften eine hochgenaue Messung sowohl mit taktilen als auch mit berührungslosen Sensoren ermöglicht, kann insgesamt eine sehr hohe Genauigkeit beim Einmessen erreicht werden.

Der sphärische Oberflächenbereich kann mit einem Abstand größer als Null über der ebenen Fläche angeordnet sein, beispielsweise auf einem stabförmigen Träger, wobei der Stabdurchmesser des Trägers dann klein gegenüber dem Durchmesser der kreisbogenförmigen Kante sein sollte. Alternativ hierzu ist es jedoch bevorzugt, wenn der sphärische Oberflächenbereich auf der ebenen Fläche aufliegt, d.h. der definierte Abstand ist Null. Darüber hinaus ist es auch denkbar, eine Teilkugel so in eine Platte einzulassen, dass ein sphärischer Oberflächenbereich der Kugel aus der ebenen Oberfläche der Platte herausragt und die Kante im Übergangsbereich bildet.

In dieser bevorzugten Ausgestaltung können die Mittelpunkte der kreisbogenförmigen Kante und der Vollkugeloberfläche sehr einfach verglichen werden, indem man die ebene Fläche als Referenzmaß verwendet. In einer bevorzugten Ausgestaltung des neuen Verfahrens wird die ebene Fläche als Referenzmaß für die z-Koordinate eines dreidimensionalen Gerätekoordinatensystems verwendet, während die x- und y-Koordinaten anhand der Mittelpunkte der kreisbogenförmigen Kante und des sphärischen Oberflächenbereichs bestimmt werden.

In einer weiteren Ausgestaltung liegt der ebene Oberflächenbereich auf der ebenen Fläche auf.

Diese Ausgestaltung ist besonders bevorzugt, weil die Kante dann auf bzw. in der ebenen Fläche liegt. Der Abgleich der z-Koordinaten der mit den verschiedenen Messsensoren erfassbaren Mittelpunkte ist hierdurch noch einfacher und genauer.

In einer weiteren Ausgestaltung ist das Referenzmessobjekt auf der ebenen Fläche durch Ansprengen befestigt.

Ansprengen ist ein Fügeverfahren, bei dem zwei Teile im Wesentlichen auf Grund von molekularen Anziehungskräften zusammengehalten werden. Zum Ansprengen sollten die Flächen, die miteinander in Kontakt gebracht werden, frei von Staub, Fett und sonstigen Verunreinigungen sein. Das Ansprengen ist eine sehr einfache und zuverlässige Vorgehensweise, die besonders vorteilhaft ist, wenn das Referenzmessobjekt relativ klein ist, was wiederum bevorzugt ist, um einen Prüfkörper für ein hochgenaues Koordinatenmessgerät herzustellen.

In einer weiteren Ausgestaltung verläuft die Kante über einen Kreiswinkel von mehr als 180°. In einer besonders bevorzugten Ausgestaltung beschreibt die Kante einen Vollkreis.

Diese Ausgestaltung vereinfacht die Bestimmung des Kreismittelpunktes der Kante und sie ermöglicht daher eine schnellere und noch genauere Erfassung der Referenzmesswerte.

Das Kugelsegment ist eine Halbkugel oder kleiner als eine Halbkugel. Die erfindungsgemäße Ausgestaltung besitzt den Vorteil, dass die kreisbogenförmige Kante aus zwei entgegengesetzten Richtungen formtreu sichtbar ist. Demgegenüber kann die Kante bei einer Dreiviertelkugel oder einem anderen Kugelsegment mit einem Segmentwinkel >180° nur von der ebenen Seite her formtreu erfasst werden.

In einer weiteren Ausgestaltung weist der sphärische Oberflächenbereich eine Krümmung auf, die einem Kugelradius im Bereich zwischen 0,5 mm und 5 mm entspricht. In einem bevorzugten Ausführungsbeispiel liegt der Kugelradius bei etwa 2 bis 3 mm.

Diese Ausgestaltung ermöglicht eine sehr genaue Einmessung eines Koordinatenmessgerätes mit einem miniaturisierten Taststift, wie er beispielsweise in DE 103 14 304 A1 offenbart ist. Die bevorzugten Kugelradien bieten einerseits eine hohe Messauflösung und sind andererseits in einer Größenordnung, die eine kostengünstige Herstellung des neuen Prüfkörpers ermöglicht.

In einer weiteren Ausgestaltung beinhaltet der neue Prüfkörper zumindest drei Referenzmessobjekte, die in unterschiedlichen Abständen zueinander angeordnet sind. In einem derzeit besonders bevorzugten Ausführungsbeispiel beinhaltet der neue Prüfkörper fünf solcher Referenzmessobjekte.

Diese Ausgestaltung besitzt den Vorteil, dass eine Vielzahl von Referenzmesswerten erfasst und miteinander verglichen werden können. Außerdem kann man durch Vergleich der verschiedenen Referenzmesswerte und auch durch Auswertung der relativen Abstände der Referenzmessobjekte zueinander die Genauigkeit des berechneten Abstandsvektors zwischen den Sensoren beurteilen, was in einer Ausgestaltung des neuen Verfahrens bevorzugt ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine vereinfachte, schematische Darstellung eines Multisensor- Koordinatenmessgerätes, das mit einem Prüfkörper nach der vorliegen- den Erfindung eingemessen wird,
- Fig. 2: ein bevorzugtes Ausführungsbeispiel für den neuen Prüfkörper,
- Fig. 3: einen Teil des neuen Prüfkörpers aus Fig. 2 in einer Querschnittsan- sicht,
- Fig. 4: eine grafische Darstellung zur Erläuterung eines bevorzugten Ausfüh- rungsbeispiels für ein Referenzmessobjekt an dem neuen Prüfkörper,
- Fig. 5: eine vereinfachte grafische Darstellung zur Erläuterung eines weiteren Ausführungsbeispiels für ein Referenzmessobjekt des neuen Prüfkör- pers, und
- Fig. 6: eine vereinfachte grafische Darstellung zur Erläuterung eines weiteren Ausführungsbeispiels für ein Referenzmessobjekt des neuen Prüfkör- pers.

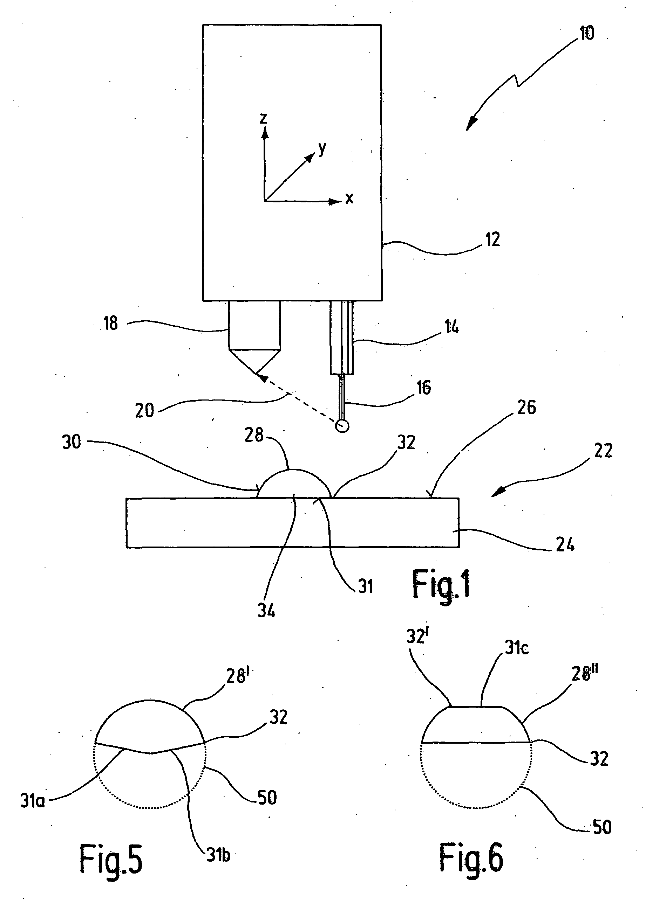

In Fig. 1 ist ein Koordinatenmessgerät in seiner Gesamtheit mit der Bezugsziffer 10 bezeichnet.

Das Koordinatenmessgerät 10 besitzt einen Träger bzw. Halter 12, der entlang von drei Koordinatenachsen x, y, z in einem Messvolumen verfahrbar ist. Der Träger bzw. Halter 12 kann insbesondere die Pinole eine Koordinatenmessgerätes 10 sein. In einem besonders bevorzugten Ausführungsbeispiel handelt es sich um die Pinole eines Koordinatenmessgerätes, wie es in DE 10 2004 020 996 A1 beschrieben ist.

An dem Träger 12 ist ein Tastkopf 14 mit einem Taststift 16 angeordnet, wobei die vereinfachte Darstellung in Fig. 1 nicht maßstabsgetreu ist. Der Tastkopf 14 mit dem Taststift 16 ist ein taktiler Sensor, der dazu dient, einen Messpunkt an einem Messobjekt anzutasten. In einem besonders bevorzugten Ausführungsbeispiel handelt es sich bei dem Tastkopf 14 um einen Tastkopf, wie er in DE 103 14 304 A1 beschrieben ist.

Mit der Bezugsziffer 18 ist ein optischer Sensor bezeichnet, beispielsweise eine Kamera mit zugehöriger Bildverarbeitungseinheit. Der optische Sensor 18 ermöglicht eine berührungslose Erfassung eines oder mehrerer Messpunkte an einem Messobjekt.

Mit der Bezugsziffer 20 ist der Abstandsvektor bezeichnet, der die relative Lage der beiden Messsensoren, 14, 18 zueinander repräsentiert. Der Abstandsvektor 20 ist ein wichtiger Parameter, um Koordinatenmesswerte der beiden Sensoren 14, 18 miteinander zu vergleichen.

Mit der Bezugsziffer 22 ist ein Prüfkörper bezeichnet, der dazu dient, das Koordinatenmessgerät 10 einzumessen. Unter anderem wird dabei der Betrag und die Richtung des Abstandsvektors 20 bestimmt.

Der Prüfkörper 22 beinhaltet eine Platte 24 mit einer ebenen Fläche 26. In einem bevorzugten Ausführungsbeispiel ist die Fläche 26 poliert, um eine möglichst geringe Rauigkeit zu erhalten. In einem bevorzugten Ausführungsbeispiel ist die Platte 24 aus Zerodur oder aus Invar hergestellt.

Auf der Fläche 26 ist ein Referenzmessobjekt 28 angeordnet. In dem gezeigten Ausführungsbeispiel ist das Referenzmessobjekt ein Kugelsegment mit einer sphärischen Oberfläche 30, einer ebenen Oberfläche 31 und einer Kante 32. Vorzugsweise ist das Kugelsegment 28 durch Ansprengen auf der Fläche 26 des Prüfkörpers 22 befestigt. Alternativ oder ergänzend hierzu kann das Kugelsegment 28 mithilfe eines Klebstoffs auf der Platte 24 befestigt sein. Darüber hinaus ist es denkbar, dass das Referenzmessobjekt 28 eine Vollkugel ist, die in geeigneter Weise in einer Vertiefung (hier nicht dargestellt) der Platte 24 eingelassen ist, so dass sich eine "Kante" im Übergangsbereich zwischen dem Referenzmessobjekt 28 und der Fläche 26 ergibt. Des Weiteren ist es grundsätzlich möglich, dass das Referenzmessobjekt auf einem stabförmigen Abstandhalter sitzt, der an der Platte 24 befestigt ist, wie dies von Prüfkörpern aus dem eingangs zitierten Stand der Technik bekannt ist.

In dem bevorzugten Ausführungsbeispiel ist das Referenzmessobjekt ein Kugelsegment, das durch Abschleifen einer Vollkugel hergestellt ist. Das Kugelsegment 28 liegt mit seiner geschliffenen und polierten Oberfläche 31 auf der ebenen Fläche 26 der Platte 24 auf. Mit der Bezugsziffer 34 ist der Kreisbogenmittelpunkt der kreisbogenförmigen Kante 32 bezeichnet.

Bevor nun ein bevorzugtes Verfahren zum Einmessen des Koordinatenmessgerätes 10 beschrieben wird, werden weitere Details eines bevorzugten Ausführungsbeispiels des neuen Prüfkörpers 22 beschrieben.

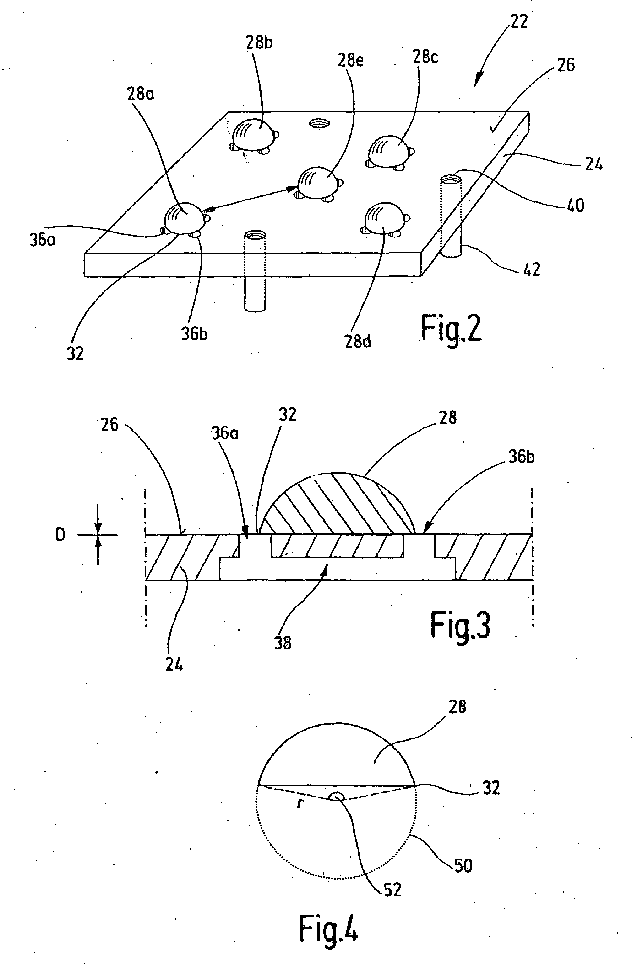

Fig. 2 zeigt ein bevorzugtes Ausführungsbeispiel des neuen Prüfkörpers 22 in einer perspektivischen Darstellung. Gleiche Bezugszeichen bezeichnen dieselben Elemente wie zuvor.

Der Prüfkörper 22 besitzt hier fünf Referenzmessobjekte 28a bis 28e, die mit unterschiedlichen relativen Abständen d zueinander auf der Platte 24 angeordnet sind. Wie aus Fig. 2 und im Übrigen aus der Querschnittsansicht in Fig. 3 erkennbar ist, weist die Platte 24 unter jedem Kugelsegment 28 vier Löcher 36a, 36b auf. Die Löcher 36a, 36b sind Durchgangsbohrungen durch die Platte 24 die in einer auf der Unterseite der Platte 24 vorgesehenen Vertiefung 38 enden. Das Kugelsegment 28 ist über den vier Löchern 36 so angeordnet, dass die Kante 32 über den Löchern verläuft. Hierdurch ist es möglich, die Kante 32 mit dem Taststift 16 anzutasten, und zwar sowohl von oben als auch von der Rückseite der Platte 24. Die Vertiefung 38 dient im letztgenannten Fall dazu, das Einfahren des Tastkopfes 14 in die Platte 24 zu ermöglichen, wenn die Länge des Taststiftes 16 geringer ist als die Dicke der Platte 24. Dies ist besonders bei sehr feinen und filigranen Taststiften bevorzugt.

Darüber hinaus ist es auf Grund der Löcher 36a, 36b möglich, die Kante 32 optisch von der Rückseite der Platte 34 her zu erfassen. Damit ermöglicht der neue Prüfkörper 22 dieses Ausführungsbeispiels eine Umschlagsmessung, d.h. eine Vermessung der Referenzmessobjekte 28 sowohl von der Oberseite als auch von der Unterseite der Platte 24 her. Um eine solche Umschlagsmessung auch mechanisch mit der gewünschten Genauigkeit zu ermöglichen, besitzt die Platte 24 weitere Bohrungen 40, in die Füße 42 eingeschraubt werden können, und zwar wahlweise von der Unterseite (siehe Fig. 2) oder von der Oberseite der Platte 24 her.

In einem bevorzugten Ausführungsbeispiel ist das Kugelsegment 28 aus Siliziumnitrit hergestellt. Alternativ hierzu kann das Kugelsegment (allgemeiner: das Referenzmessobjekt) beispielsweise aus Rubin oder Saphir hergestellt sein, wobei Siliziumnitrit bevorzugt ist, weil es lichtundurchlässig ist und daher die exakte berührungslose Erfassung des Referenzmessobjektes vereinfacht.

In Fig. 3 ist der Abstand D zwischen dem Referenzmessobjekt 28 und der Fläche 26 schematisch angedeutet. In dem bevorzugten Ausführungsbeispiel ist dieser Abstand D = 0, da das Kugelsegment 28 mit seiner Segmentfläche 31 auf der ebenen Fläche 26 aufliegt und an dieser anhaftet. Alternativ hierzu könnte das Kugelsegment 28 (oder ein anderes Referenzmessobjekt) jedoch auch in einem Abstand D größer Null über der Fläche 26 angeordnet sein.

Fig. 4 zeigt weitere Details des Referenzmessobjektes 28 gemäß einem bevorzugten Ausführungsbeispiel. Wie bereits erwähnt, handelt es sich um ein Kugelsegment, also einen Teilbereich aus einer Vollkugel, die in Fig. 4 mit der Bezugsziffer 50 bezeichnet ist. In den bevorzugten Ausführungsbeispielen ist der Segmentwinkel 52 maximal 180°, d.h. das Kugelsegment ist maximal eine Halbkugel. Dadurch ist die Kante 32 sowohl bei einer Draufsicht von der sphärischen Oberflächenseite her als auch in einer Draufsicht von der ebenen Oberflächenseite her sichtbar. Der Radius r der Vollkugel 50 liegt im bevorzugten Ausführungsbeispiel im Bereich zwischen 0,5 und 5 mm.

Fig. 5 und Fig. 6 zeigen weitere Ausführungsbeispiele für Referenzmessobjekte nach der vorliegenden Erfindung. In Fig. 5 ist ein Kugelsektor (im Querschnitt) gezeigt, der zwei ebene Oberflächenbereiche 31a, 31b besitzt. Der Kugelsektor 28' kann mit einem der ebenen Oberflächenbereiche 31a, 31b auf der Fläche 26 der Platte 24 aufliegen, so dass der andere ebene Oberflächenbereich von der Fläche 26 hochsteht und ein Antasten der Kante 32 ermöglicht, selbst wenn die Platte 24 keine Bohrungen 40 aufweist.

Fig. 6 zeigt eine Kugelschicht 28", die ebenso wie das Kugelsegment 28 durch Abschleifen einer Vollkugel 50 hergestellt werden kann. Im Gegensatz zu dem Kugelsegment 28 besitzt die Kugelschicht 28" eine zweite ebene Oberfläche 31c und dementsprechend eine zweite kreisbogenförmige Kante 32'.

Bei einem bevorzugten Verfahren zum Einmessen des Koordinatenmessgerätes 10 wird das Referenzmessobjekt 28 zunächst mit dem Taststift 16 an mehreren Messpunkten angetastet. Mithilfe eines Auswerteverfahrens, das den einschlägigen Fachleuten auf diesem Gebiet bekannt ist, kann aus der Vielzahl der Messpunkte ein Kugelmittelpunkt bestimmt werden, der dem Mittelpunkt der Vollkugel 50 entspricht. Die Koordinaten des Kugelmittelpunktes werden zu Null gesetzt. Anschließend wird die Fläche 26 der Platte 24 angetastet und der erhaltene z-Wert wird zu Null gesetzt. Die Koordinaten x = 0, Y = 0 und z = 0 bilden nun den Ursprung eines Referenzkoordinatensystems.

Im nächsten Schritt wird die kreisbogenförmige Kante 32 mithilfe des optischen Sensors 18 erfasst und es wird der Kreisbogenmittelpunkt 34 der Kante 32 bestimmt. Die sich dabei ergebenden Koordinaten x, y und z (bezogen auf den Ursprung des definierten Koordinatensystems) stellen die Komponenten des Abstandsvektors 20 in den drei Raumrichtungen x, y, z dar.

Um die Genauigkeit des Abstandsvektors 20 zu überprüfen, wird die Platte 24 in einem Ausführungsbeispiel durch Vermessen von zwei Kugelsegmenten 28a, 28b sowie Vermessen der Fläche 26 mit einem der Sensoren 14, 18 rechnerisch ausgerichtet. Anschließend werden die Mittelpunkte der anderen Kugelsegmente 28c bis 28e mit demselben Sensor ermittelt. Mit dem oder den weiteren Sensoren werden die Mittelpunktskoordinaten der Kugelsegmente 28a bis 28e ebenfalls vermessen. Anhand der Differenz der mit den verschiedenen Sensoren ermittelten Mittelpunkte kann eine Aussage über die Genauigkeit des Abstandsvektors 20 getroffen werden. Darüber hinaus ist durch Umdrehen des Prüfkörpers 22 eine Umschlagsmessung möglich, die eine weitere rechnerische Überprüfung der Genauigkeit ermöglicht.

## Patentansprüche

1. Prüfkörper zum Einmessen eines Koordinatenmessgerätes (10), insbesondere eines Multisensor-Koordinatenmessgerätes, mit zumindest einem Kugelsegment (28), das einen sphärischen Oberflächenbereich (30) und einen ebenen Oberflächenbereich (31) aufweist, der an den sphärischen Oberflächenbereich (30) angrenzt, wobei der sphärische Oberflächenbereich (30) ein Teilbereich aus einer Vollkugeloberfläche (50) ist, der in einer kreisbogenförmigen Kante (32) endet, und mit einer Platte (24), die eine ebene Fläche (26) aufweist, über der der sphärische Oberflächenbereich (30) in einem definierten Abstand (D) so angeordnet ist, dass die Kante (32) in einer Draufsicht sichtbar ist, wobei die ebene Fläche (26) zumindest eine Durchgangsbohrung (36) aufweist, die senkrecht unter der Kante (32) angeordnet ist, so dass die Kante (32) seitlich antastbar ist, und wobei das Kugelsegment (28) einen Segmentwinkel von maximal 180° aufweist, so dass die Kante (32) sowohl bei einer Draufsicht von der sphärischen Oberflächenseite her als auch in einer Draufsicht von der ebenen Oberflächenseite her formtreu sichtbar ist.

2. Prüfkörper nach Anspruch 1, wobei der ebene Oberflächenbereich (31) auf der ebenen Fläche (26) aufliegt.

3. Prüfkörper nach Anspruch 2, wobei das Kugelsegment (28) auf der ebenen Fläche (26) durch Ansprengen befestigt ist.

4. Prüfkörper nach einem der Ansprüche 1 bis 3, wobei die Kante (32) über einen Kreiswinkel von mehr als 180° verläuft.

5. Prüfkörper nach einem der Ansprüche 1 bis 4, wobei der sphärische Oberflächenbereich (30) eine Krümmung aufweist, die einem Kugelradius (r) im Bereich zwischen 0,5 mm und 5 mm entspricht.

6. Prüfkörper nach einem der Ansprüche 1 bis 5 mit zumindest drei Kugelsegmente (28a-28c), die in unterschiedlichen Abständen (d) zueinander angeordnet sind.

7. Prüfkörper nach einem der Ansprüche 1 bis 6, wobei die Platte (24) weitere Bohrungen (40) besitzt, in die wahlweise von der Unterseite oder von der Oberseite der Platte (24) her Füße (42) eingeschraubt werden können.

8. Verfahren zum Einmessen eines Koordinatenmessgerätes (10) mit zumindest einem ersten und einem zweiten Messsensor (14, 18), die auf verschiedenen physikalischen Messprinzipien beruhen, mit den Schritten:
- Anordnen eines Prüfkörpers (22) mit zumindest einem Referenzmessobjekt (28) in einem Messvolumen des Koordinatenmessgerätes (10),
- Vermessen des zumindest einen Referenzmessobjektes (28) mit dem ersten Messsensor (14), um erste Referenzmesswerte zu bestimmen,
- Vermessen des zumindest einen Referenzmessobjektes (28) mit dem zweiten Messsensor (18), um zweite Refetenzmesswerte zu Bestimmen, und
- Abgleichen der ersten und zweiten Referenzmesswerte,
wobei das Referenzmessobjekt ein Kugelsegment (28) ist, das einen sphärischen Oberflächenbereich (30) und einen ebenen Oberflächenbereich (31) aufweist, der an den sphärischen Oberflächenbereich (30) angrenzt, wobei der sphärische Oberflächenbereich (30) ein Teilbereich aus einer Vollkugeloberfläche (50) ist, der in einer kreisbogenförmigen Kante (32) endet, wobei der Prüfkörper eine Platte (24) mit einer ebenen Fläche (26) aufweist, über der der sphärische Oberflächenbereich (30) in einem definierten Abstand (D) so angeordnet ist, dass die Kante (32) in einer Draufsicht sichtbar ist, wobei die ebene Fläche (26) zumindest eine Durchgangsbohrung (36) aufweist, die senkrecht unter der Kante (32) angeordnet ist, so dass die Kante, (32) seitlich antastbar ist, wobei das Kugelsegment (28) einen Segmentwinkel von maximal 180° aufweist, so dass die Kante (32) sowohl bei einer Draufsicht von der sphärischen Oberflächenseite her als auch in einer Draufsicht von der ebenen Oberflächenseite her formtreu sichtbar ist, und
wobei das Referenzmessobjekt (28) sowohl von der Unterseite als auch von der Oberseite der Platte (24) her vermessen wird.

## Claims

1. A calibrating gauge for calibrating a coordinate measuring machine (10), in particular a multi-sensor coordinate measuring machine, comprising at least one ball segment (28) having a spherical surface region (30) and a flat surface region (31) which adjoins the spherical surface region (30), wherein the spherical surface region (30) is a part of the surface area (50) of a complete ball, said part of the surface area terminating in an edge (32) formed as a circular arc, and comprising a board (24) having a flat face (26), above which the spherical surface region (30) is arranged with a defined distance (D) such that the edge (32) is visible in a top view, wherein the flat face (26) comprises at least one through-hole (36) which is arranged to be normal to and below the edge (32) such that the edge (32) can be touched from the side, and wherein the ball segment (28) comprises a segment angle of 180° at maximum such that the edge (32) is visible with its accurate shape both in a top view from the spherical surface side as well as in a top view from the flat surface side.

2. The calibrating gauge according to claim 1, wherein the flat surface region (31) bears on the flat face (26).

3. The calibrating gauge according to claim 2, wherein the ball segment (28) is secured to the flat face (26) by wringing.

4. The calibrating gauge according to any one of claims 1 to 3, wherein the edge (32) extends across a circular angle of more than 180°.

5. The calibrating gauge according to any one of claims 1 to 4, wherein the spherical surface region (30) comprises a curvature which corresponds to a ball radius (r) in a range between 0.5 mm and 5 mm.

6. The calibrating gauge according to any one of claims 1 to 5, further comprising at least three ball segments (28a-28c) which are arranged with mutually different distances (d).

7. The calibrating gauge according to any one of claims 1 to 6, wherein the board has further holes into which stands (42) can be screwed selectively from the bottom side or from the top side of the board (24).

8. A method for calibrating a coordinate measuring machine (10) having at least a first and a second probe (14, 18) which are based on different physical measuring principles, the method comprising the steps of:
- arranging a calibrating gauge (22) having at least one measurement object (28) in a measuring volume of the coordinate measuring machine (10),
- measuring the at least one reference measurement object (28) using the first probe (14) in order to determine first reference measurement values,
- measuring the at least one reference measurement object (28) using the second probe (18) in order to determine second reference values, and
- matching the first and second reference measurement values,
wherein the reference measurement object is a ball segment (28) having a spherical surface region (30) and a flat surface region (31) which adjoins the spherical surface region (30), wherein the spherical surface region (30) is a part of the surface area (50) of a complete ball terminating in an edge (32) which is shaped as a circular arc, wherein the calibrating gauge comprises a board (24) having a flat face (26) above which the spherical surface region (30) is arranged with a defined distance (D) such that the edge (32) is visible in a top view, wherein the flat face (26) comprises at least one through-hole (36) arranged normally below the edge (32) such that the edge (32) can be touched from the side, wherein the ball segment (28) comprises a segment angle of 180° at maximum such that the edge (32) is visible in a top view from the spherical surface region as well as in a top view from the flat surface region, and
wherein the reference measurement object (28) is measured from the bottom side and from the top side of the board (24) as well.

## Revendications

1. Eprouvette pour le calibrage d'un appareil de mesure de coordonnées (10), en particulier d'un appareil de mesure de coordonnées à plusieurs capteurs, comprenant au moins un segment sphérique (28), qui présente une zone de surface (30) sphérique et une zone de surface (31) plane, laquelle est contiguë à la zone de surface (30) sphérique, la zone de surface (30) sphérique étant une zone partielle provenant d'une surface de sphère pleine (50), qui se termine dans une arête (32) en forme d'arc de cercle, et une plaque (24), qui présente une surface (26) plane, au-dessus de laquelle la zone de surface (30) sphérique est disposée à une distance (D) définie de telle sorte que l'arête (32) est visible dans une vue de dessus, la surface (26) plane présentant au moins un perçage de passage (36), qui est disposé verticalement au-dessous de l'arête (32), de sorte que l'arête (32) peut être palpée latéralement, et le segment sphérique (28) présentant un angle de segment de 180° maximum, de sorte que l'arête (32) est visible de façon fidèle à la forme aussi bien dans une vue de dessus à partir du côté de surface sphérique que dans une vue de dessus à partir du côté de surface plan.

2. Eprouvette selon la revendication 1, la zone de surface (31) plane reposant sur la surface (26) plane.

3. Eprouvette selon la revendication 2, le segment sphérique (28) étant fixé sur la surface (26) plane par accolement.

4. Eprouvette selon l'une quelconque des revendications 1 à 3, l'arête (32) s'étendant sur un angle de cercle de plus de 180°.

5. Eprouvette selon l'une quelconque des revendications 1 à 4, la zone de surface (30) sphérique présentant une courbure qui correspond à un rayon de sphère (r) compris entre 0,5 mm et 5 mm.

6. Eprouvette selon l'une quelconque des revendications 1 à 5 dotée d'au moins trois segments sphériques (28a-28c), qui sont disposés à différentes distances (d) les uns des autres.

7. Eprouvette selon l'une quelconque des revendications 1 à 6, la plaque (24) présentant d'autres perçages (40), dans lesquels des pieds (42) peuvent être vissés au choix à partir du côté inférieur ou du côté supérieur de la plaque (24).

8. Procédé pour le calibrage d'un appareil de mesure de coordonnées (10) doté d'au moins un premier et d'un second capteurs de mesure (14, 18), qui reposent sur différents principes de mesure physiques, comprenant les étapes suivantes :
- agencement d'une éprouvette (22) avec au moins un objet de mesure de référence (28) dans un volume de mesure de l'appareil de mesure de coordonnées (10),
- mesurage du au moins un objet de mesure de référence (28) avec le premier capteur de mesure (14), pour déterminer des premières valeurs de mesure de référence,
- mesurage du au moins un objet de mesure de référence (28) avec le second capteur de mesure (18), afin de déterminer des secondes valeurs de mesure de référence, et
- ajustage des premières et secondes valeurs de mesure de référence, l'objet de mesure de référence étant un segment sphérique (28) qui présente une zone de surface (30) sphérique et une zone de surface (31) plane, laquelle est contiguë à la zone de surface (30) sphérique, la zone de surface (30) sphérique étant une zone partielle provenant d'une surface de sphère pleine (50), qui se termine dans une arête (32) en forme d'arc de cercle, l'éprouvette présentant une plaque (24) avec une surface (26) plane, au-dessus de laquelle la zone de surface (30) sphérique est disposée à une distance (D) définie de telle sorte que l'arête (32) est visible dans une vue de dessus, la surface (26) plane présentant au moins un perçage de passage (36), qui est disposé verticalement au-dessous de l'arête (32), de sorte que l'arête (32) peut être palpée latéralement, le segment sphérique (28) présentant un angle de segment de 180° maximum, de sorte que l'arête (32) est visible de façon fidèle à la forme aussi bien dans une vue de dessus à partir du côté de surface sphérique que dans une vue de dessus à partir du côté de surface plan, et
l'objet de mesure de référence (28) étant mesuré aussi bien à partir du côté inférieur qu'à partir du côté supérieur de la plaque (24).
